# EUROPEAN PATENT SPECIFICATION

(11) **EP 2 538 485 B1**
(45) Date of publication and mention of the grant of the patent: **31.08.2016**
(21) Application number: 11744739.1
(22) Date of filing: 18.02.2011
(51) Int. Cl.: H01M 10/058, H01M 2/02, H01M 4/36, H01M 10/0565, H01M 4/1395, H01M 4/62, H01M 4/04, H01M 4/134, H01M 4/48, H01M 10/052, H01M 4/38

(54) **POLYMER SECONDARY BATTERY AND METHOD FOR MANUFACTURING THE SAME**
POLYMERSEKUNDÄRBATTERIE UND HERSTELLUNGSVERFAHREN DAFÜR
BATTERIE SECONDAIRE POLYMÈRE ET PROCÉDÉ POUR SA PRODUCTION

(30) Priority: 18.02.2010 JP 2010033587
(43) Date of publication of application: 26.12.2012
(73) Proprietor: NEC Energy Devices, Ltd., Chuo-ku Sagamihara-shi Kanagawa 252-5298 (JP)
(72) Inventor: KAJITA, Tetsuya, Sagamihara-shi Kanagawa 252-5298 (JP); KONO, Yasutaka, Sagamihara-shi Kanagawa 252-5298 (JP); KASAHARA, Ryuichi, Sagamihara-shi Kanagawa 252-5298 (JP); IRIYAMA, Jiro, Sagamihara-shi Kanagawa 252-5298 (JP); NUMATA, Tatsuji, Sagamihara-shi Kanagawa 252-5298 (JP)
(74) Representative: Vossius & Partner Patentanwälte Rechtsanwälte mbB
(86) International application number: PCT/JP2011/053480
(87) International publication number: WO 2011/102453

(56) References cited:
- JP-A- 2004 139 886
- JP-A- 2004 139 886
- JP-A- 2008 192 488
- JP-A- 2009 070 605
- JP-A- 2009 252 705
- US-A1- 2003 104 272
- US-A1- 2004 072 067

## Description

This exemplary embodiment relates to a polymer secondary battery including a positive electrode, a negative electrode, a separator interposed between the positive electrode and the negative electrode, a gel electrolyte, and an exterior member packaging the positive electrode, the negative electrode, the separator, and the gel electrolyte, and a method for manufacturing the same.

With the spread of mobile equipment, such as cellular phones and notebook computers, the role of secondary batteries, which are the power sources of the mobile equipment, is regarded as important. Since a small size, a light weight, a high capacity and performance of not easily degraded even after repeated charges and discharges are required of these secondary batteries, lithium ion secondary batteries are currently utilized.

Carbon, such as graphite or hard carbon, is usually used for the negative electrode active material of a lithium ion secondary battery. However, although carbon can repeat the charge and discharge cycle well, the capacity has already been improved to around theoretical capacity, and therefore, a significant increase in capacity cannot be expected in the future.

Therefore, the use of silicon as the negative electrode active material is studied. For example, the theoretical capacity of a graphite negative electrode is 372 mAh/g, whereas the theoretical capacity of a silicon negative electrode is 4200 mAh/g. The theoretical capacity of the silicon negative electrode is about 10 times that of the graphite negative electrode.

However, when silicon is used for the negative electrode active material, a problem is that the volume expands and shrinks largely due to charge and discharge. When carbon (C) forms LiC6 due to charge, its volume is about 1.1 times, whereas when silicon (Si) forms Li4.4Si due to charge, its volume is about 4 times. Therefore, when silicon is used as the negative electrode active material, its volume expands and shrinks largely due to charge and discharge. Therefore, as the charge and discharge cycle is repeated, degradation due to the fine division of the negative electrode active material particles of silicon occurs (for example, JP2009-199761A), and further, the silicon peels off from the negative electrode, and the capacity retention rate decreases.

On the other hand, for example, when silicon oxide is used for the negative electrode active material as disclosed in JP6-325765A, the volume expansion and shrinkage due to charge and discharge can be decreased. However, when silicon oxide is used, problems are that the nonaqueous electrolytic solution decomposes to produce gas, and the nonaqueous electrolytic solution degrades to increase internal resistance. JP6-325765A proposes a method of suppressing the decomposition of the nonaqueous electrolytic solution and gas production by containing a particular aprotic organic solvent.

On the other hand, JP2006-59800A discloses an example in which when silicon (oxide) is used as the negative electrode active material, a gel electrolyte is used as the electrolyte. In addition, JP2004-179136A in which a gel electrolyte is similarly used proposes a negative electrode in which an active material layer is adhered to a current collector by high temperature sintering the active material layer including a silicon material and a binder, provided on the current collector, in a non-oxidizing atmosphere for long time (10 and 30 hours), and in JP2004-179136A, the gel electrolyte is filled inside columnar cracks occurring in the thickness direction of the active material layer due to temporary charge and discharge. But, in the method of JP2004-179136A, although the effect of suppressing the peeling of the active material from the negative electrode can be expected, high temperature sintering for long time (10 and 30 hours) is necessary and the productivity is low, and further, the effect of preventing degradation due to the fine division of the negative electrode active material particles of silicon themselves cannot be expected.

US 2004/0072067 A2 describes a lithium secondary battery with an active layered electrode that releases lithium and a solid electrolyte is formed in the cracks formed by release of lithium from the active layer.

In order to suppress the fine division of negative electrode active material particles and the peeling of a negative electrode active material from a negative electrode due to charge and discharge cycles while maintaining high theoretical capacity, silicon and silicon oxide were used as the negative electrode active material, and a gel electrolyte was further used as the electrolyte. The expansion and shrinkage of the volume of the negative electrode active material due to charge and discharge cycles were suppressed, and the fine division of the active material particles and the peeling of the active material particles from the negative electrode were suppressed to some extent. However, gas produced between the negative electrode active material and the gel electrolyte during charge and discharge entered voids not in contact with the gel electrolyte, inside the particles finely divided due to charge and discharge, and the activity of silicon and silicon oxide as the negative electrode active material decreased. Further, it became clear that the breakage of the polymer included in the gel electrolyte occurred due to the expansion and shrinkage of the volume of the negative electrode active material. Thus, when the charge and discharge cycle was repeated, the capacity decreased.

This exemplary embodiment has been made in view of the above problems, and it is an object of this exemplary embodiment to provide a polymer secondary battery using silicon and silicon oxide as a negative electrode active material that shows a high capacity retention rate also when a charge and discharge cycle is repeated. This object is achieved with the features of the claims.

This exemplary embodiment can provide a polymer secondary battery using silicon and silicon oxide as a negative electrode active material that shows a high capacity retention rate also when a charge and discharge cycle is repeated.

Figure 1 is a schematic diagram showing the behavior of a negative electrode active material particle in a conventional polymer secondary battery during first charge.
Figure 2 is a schematic diagram showing the behavior of a negative electrode active material particle in a polymer secondary battery according to this exemplary embodiment during discharge from a full charge state.
Figure 3 is a schematic diagram showing one example of a method for fabricating a laminate type secondary battery before the formation of a gel electrolyte.
Figure 4 is a graph showing the discharge capacity retention rate with respect to the number of cycles in charge and discharge cycle tests in Examples 1 and 2.
Figure 5 is a graph showing the discharge capacity retention rate with respect to the number of cycles in a charge and discharge cycle test in Comparative Example 1.

### Description of Embodiment

A polymer secondary battery according to this exemplary embodiment includes a positive electrode, a negative electrode, a separator interposed between the positive electrode and the negative electrode, and a polymer-containing gel electrolyte, wherein the negative electrode includes silicon and silicon oxide as a negative electrode active material, and the polymer-containing gel electrolyte is present in voids formed by the fine division of particles of the negative electrode active material. In addition, preferably, the polymer-containing gel electrolyte is formed by the polymerization of a polymerizable compound, and includes a supporting salt acting as a polymerization initiator for the polymerizable compound and includes no polymerization initiator other than the supporting salt.

In addition, a method for manufacturing a polymer secondary battery according to this exemplary embodiment is a method for manufacturing a polymer secondary battery including a positive electrode, a negative electrode, a separator interposed between the positive electrode and the negative electrode, a gel electrolyte, and an exterior member packaging the positive electrode, the negative electrode, the separator, and the gel electrolyte, the negative electrode including silicon and silicon oxide as a negative electrode active material, the method including, in the following order, the steps of enclosing the positive electrode, the negative electrode, the separator, and a gel electrolyte composition including a polymerizable compound inside the exterior member; at least performing charge once, and infiltrating the gel electrolyte composition including the polymerizable compound into voids formed by the fine division of particles of the negative electrode active material due to a large volume change accompanying the charge; and polymerizing the polymerizable compound to provide a gel electrolyte. In addition, the gel electrolyte composition preferably includes a supporting salt acting as a polymerization initiator for the polymerizable compound and includes no polymerization initiator other than the supporting salt.

In the manufacturing method according to this exemplary embodiment and the manufactured battery, by performing charge at least once (hereinafter referred to as initial charge) before polymerizing the polymerizable compound included in the gel electrolyte composition, a polymer-containing gel electrolyte is formed and is present in voids formed by the fine division of the negative electrode active material particles, and thus, it is possible to suppress finer division of the silicon compound particles including silicon and silicon oxide, which is the negative electrode active material, the remaining of gas in the particles, and the breakage of the polymer, in the charge and discharge cycles of the manufactured secondary battery. Thus, the polymer secondary battery manufactured by the method according to this exemplary embodiment shows a high capacity retention rate also when the charge and discharge cycle is repeated. In addition, it is more preferred that the gel electrolyte composition including the polymerizable compound includes a supporting salt acting as a polymerization initiator and includes no polymerization initiator other than the supporting salt because it is not necessary to separately add, to the gel electrolyte composition, a polymerization initiator that decreases battery characteristics when it remains. Particularly when the negative electrode active material particles including silicon and silicon oxide are finely divided, gas is easily produced. If a polymerization initiator other than the supporting salt remains, the suppression of gas production is not sufficient even if the gel electrolyte is present in the voids formed by the fine division of the negative electrode active material particles.

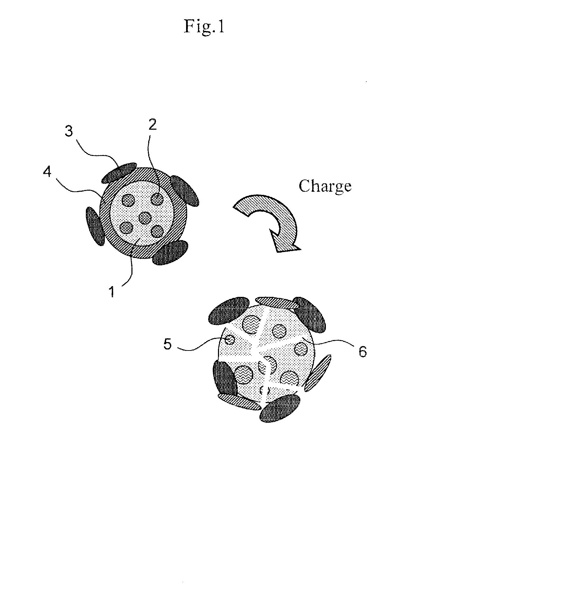

Figure 1 shows the behavior of a negative electrode active material particle during first charge in a conventional polymer secondary battery using silicon and silicon oxide as a negative electrode active material. In the conventional polymer secondary battery, a positive electrode, a negative electrode, a separator, and a gel electrolyte composition including a polymerizable compound are enclosed in an exterior member, and then, the polymerizable compound is polymerized, for example, by heating, to provide a gel electrolyte to complete the polymer secondary battery. The negative electrode active material particle in the polymer secondary battery includes Si (2) and SiO₂ (1) as shown in Figure 1, and a polymer (3) and a conductive agent (4), such as carbon, are present on the negative electrode active material particle surface. When the polymer secondary battery is charged and discharged, gas, such as CO₂ is produced between the negative electrode active material and the gel electrolyte. Since the negative electrode active material particle surface is covered with the polymer (3), the gas remains in voids (6) not in contact with the gel electrolyte, in the negative electrode active material particle finely divided due to the charge and discharge. Thus, the activity of the negative electrode active material decreases. In addition, the polymer is broken due to the volume change of the negative electrode active material particle accompanying the charge and discharge. Therefore, in the conventional polymer secondary battery, the capacity retention rate decreases when the charge and discharge cycle is repeated.

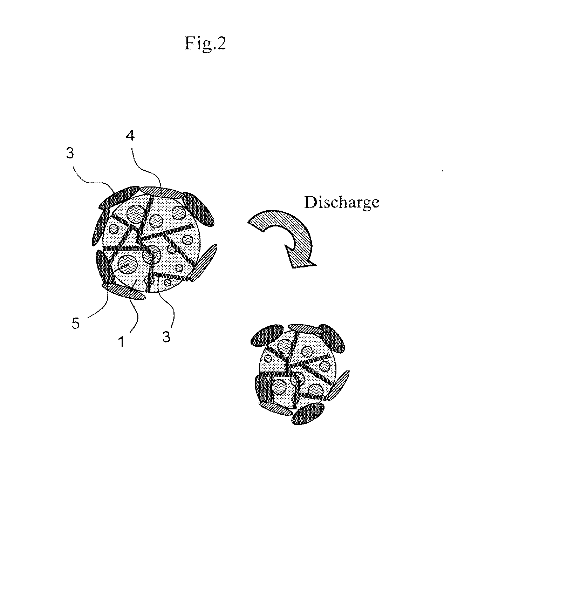

On the other hand, for the polymer secondary battery using silicon and a silicon compound for the negative electrode active material in this exemplary embodiment, initial charge is performed before the polymerizable compound is polymerized. Figure 2 shows the behavior of the negative electrode active material particle during discharge from the full charge state of the polymer secondary battery in this exemplary embodiment. In this exemplary embodiment, initial charge is performed before the polymerizable compound is polymerized to provide a gel electrolyte, and therefore, the negative electrode active material particles are already fine divided due to a large volume change accompanying the charge, and voids (6) not in contact with the gel electrolyte are not present, and instead, a polymer (3) is present in the negative electrode active material particles. In addition, the initial charge is performed in a liquid state, and therefore, gas does not remain in the particles and is released outside the negative electrode active material particles. In Figure 2, the polymerizable compound is polymerized after the first charge to make the gel electrolyte. At this time, the polymerizable compound is infiltrated into the voids formed in the negative electrode active material particles, and the polymer (3) is also formed inside the negative electrode active material particles in the polymerization step. In the polymer secondary battery fabricated in this manner, even if charge and discharge are repeated, the production of gas is suppressed, and the breakage of the polymer is suppressed, and therefore, a decrease in the activity of the negative electrode active material is suppressed. Thus, even if the charge and discharge cycle is repeated, a decrease in capacity retention rate is suppressed.

### [Configuration of Polymer Secondary Battery]

The polymer secondary battery according to this exemplary embodiment includes a positive electrode, a negative electrode, a separator interposed between the positive electrode and the negative electrode, and a polymer-containing gel electrolyte, wherein the negative electrode includes silicon and silicon oxide as a negative electrode active material, and the polymer-containing gel electrolyte is present in voids formed by the fine division of particles of the negative electrode active material. In addition, preferably, the polymer-containing gel electrolyte is formed by the polymerization of a polymerizable compound, and includes a supporting salt acting as a polymerization initiator for the polymerizable compound and includes no polymerization initiator other than the supporting salt.

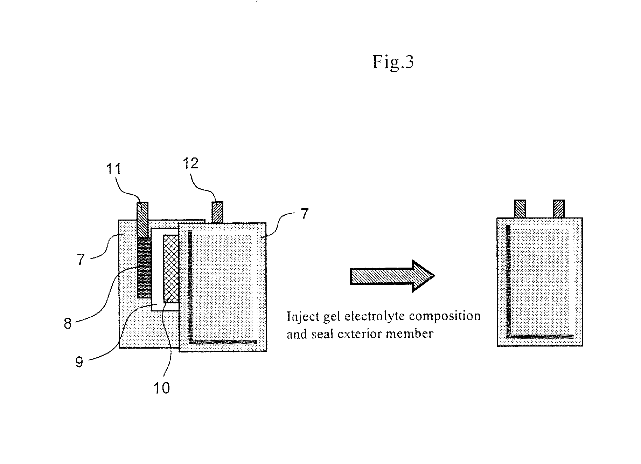

The configuration of the polymer secondary battery is not particularly limited as long as the polymer secondary battery includes a positive electrode, a negative electrode, a separator, and a gel electrolyte. But, it is preferred that the exterior member is a laminate type secondary battery because a decrease in discharge capacity due to charge and discharge cycles can be further suppressed. Figure 3 shows one example of a method for fabricating a laminate type secondary battery before the formation of a gel electrolyte. In the laminate type secondary battery before the formation of a gel electrolyte shown in Figure 3, a planar positive electrode (10) and a negative electrode (8), a separator (9) sandwiched between the positive electrode (10) and the negative electrode (8), and a gel electrolyte composition (not shown) are contained inside an exterior member. A positive electrode conductive tab (12) is attached to the positive electrode (10), and a negative electrode conductive tab (11) is attached to the negative electrode (8). The laminate type secondary battery before the formation of a gel electrolyte is fabricated by housing the positive electrode (10), separator (9), and negative electrode (8) in the exterior member (7), and injecting the gel electrolyte composition and performing sealing under reduced pressure. In this exemplary embodiment, by subsequently at least performing charge once and further polymerizing the polymerizable compound included in the gel electrolyte composition to provide a gel electrolyte, a laminate type secondary battery can be fabricated. One set of the electrode device including the positive electrode (10), the negative electrode (8), and the separator (9) is shown in Figure 3, but a plurality of sets may be laminated.

### (Negative Electrode)

The material constitution of the negative electrode includes a negative electrode active material including a composite of silicon (Si) and silicon oxide (SiO₂) capable of absorbing and releasing lithium, carbon, and a binder resin. With a mixture obtained by mixing these, the active material layer of the negative electrode is formed. A composite of silicon and silicon oxide coated with carbon may be used to provide a negative electrode active material. As methods for coating the negative electrode active material with carbon, mixing only is possible, but examples of the methods include, but not limited to, vapor deposition, CVD, and sputtering. Finely divided particles of the negative electrode active material include both finely ground particles of the negative electrode active material, and particles of the negative electrode active material with a large number of cracks (a depth of 0.5 to 1 µm or more from the outermost surfaces of the active material particles). For the binder resin, thermosetting binders, such as polyimides, polyamides, polyamideimides, polyacrylic resins, and polymethacrylic resins, can be used. The mixture can be processed into a well-known form by a method of applying a paste, which is obtained by kneading the mixture and a solvent, on metal foil, such as copper foil, and rolling the metal foil with the paste to provide an application type electrode plate, or directly pressing the mixture to provide a pressed electrode plate, or the like. The negative electrode is formed, for example, by dispersing a composite powder of Si and SiO₂, a carbon powder, and a thermosetting binder as a binder resin in a solvent, such as N-methyl-2-pyrrolidone (NMP), and kneading them to prepare a negative electrode mixture; applying this negative electrode mixture on a negative electrode current collector including metal foil; and drying the negative electrode mixture on the negative electrode current collector in a high temperature atmosphere. Other than the carbon powder, carbon black, such as acetylene black, may be mixed in the active material layer of the negative electrode, as required, in order to provide conductivity. The electrode density of the produced negative electrode active material layer is preferably 0.5 g/cm³ or more and 2.0 g/cm³ or less. If the electrode density is lower than the range, the absolute value of discharge capacity is small, and merits over conventional carbon materials may not be obtained. In addition, if the electrode density is higher than the range, it may be difficult to impregnate the electrode with the electrolytic solution, and the discharge capacity may decrease as well. The thickness of the metal foil is preferably 4 to 100 µm because it is preferred to provide such a thickness that can maintain strength. The thickness of the metal foil is more preferably 5 to 30 µm in order to increase energy density.

### (Gel Electrolyte)

The gel electrolyte of the polymer secondary battery according to this exemplary embodiment includes an aprotic organic solvent, a supporting salt, and a polymer.

Examples of the aprotic organic solvent include cyclic carbonates, such as propylene carbonate (PC), ethylene carbonate (EC), butylene carbonate (BC), and vinylene carbonate (VC), chain carbonates, such as dimethyl carbonate (DMC), diethyl carbonate (DEC), ethyl methyl carbonate (EMC), and dipropyl carbonate (DPC), aliphatic carboxylates, such as methyl formate, methyl acetate, and ethyl propionate, γ-lactones, such as γ-butyrolactone, chain ethers, such as 1,2-diethoxyethane (DEE) and ethoxymethoxyethane (EME), cyclic ethers, such as tetrahydrofuran and 2-methyltetrahydrofuran, dimethyl sulfoxide, 1,3-dioxolane, formamide, acetamide, dimethylformamide, dioxolane, acetonitrile, propylnitrile, nitromethane, ethyl monoglyme, phosphate triester, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, anisole, N-methylpyrrolidone, and fluorinated carboxylates. Only one of the aprotic organic solvents may be used, or two or more may be mixed and used.

Examples of the supporting salt include LiPF₆, LiAsF₆, LiAlCl₄, LiClO₄, LiBF₄, LiSbF₆, LiCF₃SO₃, LiC₄F₉CO₃, LiC(CF₃SO₂)₃, LiN(CF₃SO₂)₂, LiN(C₂F₅SO₂)₂, LiB₁₀Cl₁₀, lower aliphatic lithium carboxylate carboxylate, chloroborane lithium, lithium tetraphenylborate, LiCl, LiBr, LiI, LiSCN, LiCl, and imides. Only one of these may be used, or two or more may be mixed and used. The concentration of these supporting salts in the gel electrolyte is preferably 0.5 mol/l or more and 1.5 mol/l or less. If the concentration is larger than 1.5 mol/l, the characteristics of the gel electrolyte may decrease. On the other hand, if the concentration is smaller than 0.5 mol/l, the electrical conductivity may decrease.

Examples of the polymerizable compound included in the gel electrolyte composition that can be used as the raw material of the polymer include monomers and oligomers having one or more polymerizable functional groups per one molecule. Specific examples of the gelling component include methyl methacrylate, ethylene glycol di(meth)acrylate, diethylene glycol di(meth)acrylate, triethylene glycol di(meth)acrylate, tetraethylene glycol di(meth)acrylate, propylene di(meth)acrylate, dipropylene di(meth)acrylate, tripropylene di(meth)acrylate, 1,3-butanediol di(meth)acrylate, 1,4-butanediol di(meth)acrylate, (3-ethyl-3-oxetanyl)methyl methacrylate, 1,6-hexanediol di(meth)acrylate, trimethylolpropane tri(meth)acrylate, pentaerythritol tri(meth)acrylate, ditrimethylolpropane tetra(meth)acrylate, and pentaerythritol tetra(meth)acrylate. In addition to these, examples of the gelling component include monomers, such as urethane (meth)acrylate, copolymer oligomers of these, and copolymer oligomers of these and acrylonitrile. (Meth) acrylate means a substance including either or both of acrylate and methacrylate. Only one of the polymerizable compounds may be used, or two or more may be mixed and used. In addition, other components capable of gelling can also be mixed and used. Further, in the case of a laminate type secondary battery, it is preferred to use, as the polymerizable compound, a polymer obtained by polymerizing the monomer to some extent because the battery shape is easily maintained in enclosure in a laminate film. In this case, the extent of the polymerization of the monomer is not particularly limited as long as the prepared gel electrolyte composition is liquid, and the monomer is further polymerized to provide a solid gel electrolyte in the subsequent polymerization step.

In this exemplary embodiment, it is preferred that the gel electrolyte composition including the polymerizable compound includes a supporting salt acting as a polymerization initiator for the polymerizable compound and includes no polymerization initiator other than the supporting salt because it is not necessary to separately add, to the gel electrolyte composition, a polymerization initiator that decreases battery characteristics when it remains. Particularly, when LiPF₆ is used for the supporting salt, a methacrylate polymer is preferably used as the polymerizable compound because LiPF₆ acts as a polymerization initiator for the methacrylate polymer, and it is not necessary to separately add a polymerization initiator. When a polymerization initiator is separately added, it is preferred that 5% by mass or less of the polymerizable compound is included in the gel electrolyte composition, in terms of keeping the resistance of the battery low and suppressing the peeling of the electrode active material.

### (Positive Electrode)

The material constitution of the positive electrode includes a positive electrode active material including an oxide capable of absorbing and releasing lithium, a conductive agent for providing conductivity, and a binder resin. With a mixture obtained by mixing these, the active material layer of the positive electrode is formed. Examples of the oxide capable of absorbing and releasing lithium include lithium nickelate, lithium manganate, and lithium cobaltate. Examples of the conductive agent include carbon black and acetylene black. Examples of the binder resin include polyvinylidene fluoride, a vinylidene fluoride-hexafluoropropylene copolymer, vinylidene fluoride-tetrafluoroethylene copolymer, and polytetrafluoroethylene. The positive electrode is formed, for example, by dispersing an oxide powder capable of absorbing and releasing lithium, a conductive agent powder, and a binder resin in a solvent, such as N-methyl-2-pyrrolidone (NMP) or dehydrated toluene, and kneading them to prepare a positive electrode mixture; applying this positive electrode mixture on a positive electrode current collector including metal foil; and drying the positive electrode mixture on the positive electrode current collector in a high temperature atmosphere. The electrode density of the active material layer of the formed positive electrode is preferably 2.0 g/cm³ or more and 3.0 g/cm³ or less. If the electrode density is lower than the range, the absolute value of discharge capacity may be small. In addition, if the electrode density is higher than the range, it may be difficult to impregnate the electrode with the electrolytic solution, and the discharge capacity may decrease as well. The thickness of the metal foil is preferably 4 to 100 µm because it is preferred to provide such a thickness that can maintain strength. The thickness of the metal foil is more preferably 5 to 30 µm in order to increase energy density.

### (Separator)

As the separator of the polymer secondary battery according to this exemplary embodiment, a polyolefin, such as polyethylene or polypropylene, or a porous film of a fluororesin, nonwoven fabric, or the like can be used. In addition, a separator of a laminated structure in which different porous films or nonwoven fabrics are laminated can also be used.

### [Method for Manufacturing Polymer Secondary Battery]

The method for manufacturing a polymer secondary battery according to this exemplary embodiment includes, in the following order, the steps of enclosing a positive electrode, a negative electrode, a separator, and a gel electrolyte composition including a polymerizable compound inside an exterior member; at least performing charge once, and infiltrating the gel electrolyte composition including the polymerizable compound into voids formed by the fine division of particles of the negative electrode active material due to a large volume change accompanying the charge; and polymerizing the polymerizable compound to provide a gel electrolyte. The details of the steps will be described below, but this exemplary embodiment is not limited to these.

### (Exterior Member Enclosure Step)

First, a positive electrode, a negative electrode, a separator, and a gel electrolyte composition including a polymerizable compound are enclosed inside an exterior member. The exterior member is not particularly limited as long as a positive electrode, a negative electrode, a separator, and a gel electrolyte composition including a polymerizable compound can be enclosed inside. For example, a laminate film can be used.

The enclosure in the exterior member can be performed, for example, by laminating the negative electrode (8) to which the negative electrode conductive tab (11) is connected, the separator (9), and the positive electrode (10) to which the positive electrode conductive tab (12) is connected, in this order, so that the active material layers face the separator (9), then sandwiching them between two exterior members (7), injecting the gel electrolyte composition, and performing sealing under reduced pressure, as shown in Figure 3. Thus, a battery before the polymerization of the polymerizable compound can be fabricated.

### (Initial Charge Step)

Next, the battery before the polymerization of the polymerizable compound is charged at least once. The gel electrolyte composition including the polymerizable compound infiltrates into voids formed by the fine division of particles of the negative electrode active material due to a large volume change accompanying the charge. As described above, gas is released outside the negative electrode active material particles due to this initial charge, and therefore, it is possible to suppress the deactivation of the negative electrode active material and the breakage of the polymer in the charge and discharge cycles of the completed battery and suppress a decrease in capacity retention rate.

For the initial charge, charge is performed at least once. For example, as the initial charge, only one charge may be performed, charge-discharge may be performed, charge-discharge-charge may be performed, or charge-discharge-charge-discharge may be performed. In this manner, the initial charge may be completed in the discharge state or may be completed in the charge state as long as at least charge is performed once. In addition, after the first charge, charge and discharge may be performed any number of times. The charge termination voltage can be 4.2 to 3.8 V. In addition, the discharge termination voltage can be 2.5 to 3.0 V. The temperature of charge and discharge is not particularly limited as long as the polymerizable compound is not polymerized. The temperature of charge and discharge is preferably 20 to 30°C.

### (Polymerization Step)

Next, in the battery before the polymerization of the polymerizable compound, subjected to the initial charge, the polymerizable compound is polymerized to provide a gel electrolyte. The polymer secondary battery according to this exemplary embodiment is completed by this step. The method for polymerizing the polymerizable compound is not particularly limited. For example, the polymerizable compound can be polymerized by storing the battery for several days at a temperature at which the polymerizable compound can be polymerized.

### Examples

### (Example 1)

For a negative electrode material, a composite of silicon and silicon oxide was used as a negative electrode active material and carbon (acetylene black) was used as a conductive material. The molar ratio of the silicon, the silicon oxide, and the carbon used was 1:1:0.8.

The charge and discharge performance of the composite of silicon and silicon oxide used was previously confirmed (the capacity characteristics were confirmed at 2.0 V to 0.02 V with a model cell using metal lithium for a counter electrode). In the first charge, Li in an amount corresponding to about 2500 mAh/g per the negative electrode active material was absorbed. But, in the following discharge, only about 1650 mAh/g per the negative electrode active material was discharged, and an irreversible capacity of about 850 mAh/g per the negative electrode active material was obtained.

For a positive electrode material, lithium nickelate, which was an oxide capable of absorbing and releasing lithium, was used as a positive electrode active material. The lithium nickelate is commercially available as a powder reagent. The charge and discharge performance was confirmed (the capacity characteristics were confirmed at 4.3 V to 3.0 V with a model cell using metal lithium for a counter electrode). The lithium nickelate showed about 200 mAh/g, and the charge and discharge potentials were each around 3.8 V.

The active material layer of the negative electrode was fabricated by applying a negative electrode mixture, which was obtained by mixing the silicon-silicon oxide-carbon composite substance particles with a polyimide as a binder and NMP as a solvent, on 10 µm copper foil, drying the negative electrode mixture at 125°C for 5 minutes, then performing compression molding by a roll press, and performing drying treatment again in a N₂ atmosphere in a drying furnace at 350°C for 30 minutes. The drying time at 350°C was 30 minutes in this Example, but is not limited to this, and about 20 minutes to 2 hours is appropriate. If the drying time is less than 20 minutes, a decrease in adhesion due to the curing failure of the polyimide binder is feared. On the other hand, if the drying treatment is performed for more than 2 hours, the productivity only decreases, which is not preferred. This active material layer formed on the copper foil was punched to provide a negative electrode, and a negative electrode lead tab for charge extraction including nickel was ultrasonically fused. The active material layer of the positive electrode was fabricated by applying a positive electrode mixture, which was obtained by mixing active material particles including the lithium nickelate, polyvinylidene fluoride as a binder, and NMP as a solvent, on 20 µm aluminum foil and performing drying treatment at 125°C for 5 minutes. The active material layer formed on the aluminum foil was punched to provide a positive electrode, and a positive electrode lead tab for charge extraction including aluminum was ultrasonically fused. The negative electrode, a separator, and the positive electrode were laminated in this order so that the active material layers face the separator. Then, a laminate film was sandwiched, a gel electrolyte composition was injected, and sealing was performed under vacuum to fabricate a laminate type battery before the polymerization of a polymerizable compound. The ratio of the charge capacity of the positive electrode to the charge capacity of the negative electrode was Y:Z = 1.25:1.00 when the first charge capacity of the silicon-silicon oxide-carbon composite negative electrode was Y, and the first charge capacity of the positive electrode including the lithium nickelate was Z.

The gel electrolyte composition was prepared as follows. 8 Parts by mass of a polymerizable compound including 74% by mass of methyl methacrylate, which was a monomer having no ring-opening polymerizable functional group, and 26% by mass of (3-ethyl-3-oxetanyl)methyl methacrylate, which was a monomer having a ring-opening polymerizable functional group, was mixed with 92 parts by mass of a solvent with ethylene carbonate (EC):diethyl carbonate (DEC):methyl ethyl carbonate (MEC) = 3:5:2 (volume ratio) and 0.25 parts by mass (2500 ppm with respect to the monomer solution) of N,N'-azobisisobutyronitrile as a polymerization initiator. The mixture was heated and dried at 65 to 70°C while dry nitrogen gas was introduced, and then, the mixture was cooled to room temperature. Then, a dilute solvent with EC:DEC:MEC = 3:5:2 (volume ratio) was added, and the mixture was stirred for dissolution until the whole was uniform to prepare a solution including 8% by mass of a methacrylate polymer with a molecular weight of 250,000. Further, 50 parts by mass of the solution was mixed with 50 parts by mass of a solution including 2 mol/l of LiPF6 with EC:DEC:MEC = 3:5:2 (volume ratio) to prepare a gel electrolyte composition.

For the battery before the polymerization of the polymerizable compound, initial charge was performed. For the initial charge conditions, the initial charge was performed at a constant current of 1.5 mA, a charge termination voltage of 4.2 V, a discharge termination voltage of 2.5 V, and 20°C. In the second full charge state (4.2 V) after charge-discharge-charge, the fabricated battery was stored at 60°C for one day to polymerize the polymerizable compound. Thus, a laminate type secondary battery was completed.

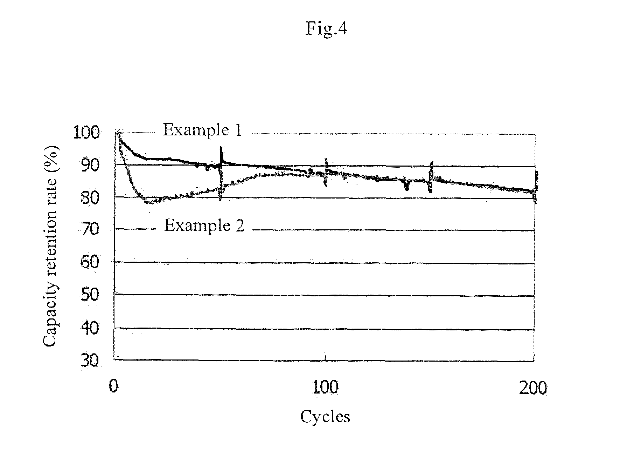

A charge and discharge cycle test was performed on the battery fabricated as described above. This charge and discharge test was performed at a constant current of 15 mA, a charge termination voltage of 4.2 V, a discharge termination voltage of 2.5 V, and 60°C for 199 cycles. In addition, the charge and discharge current was decreased from 15 mA (1 to 49 cycles) to 7 mA (50 to 99 cycles), 3.5 mA (100 to 149 cycles), and 1.75 mA (150 to 199 cycles). Table I shows the discharge capacity per the mass of the negative electrode active material after 199 cycles, and the discharge capacity retention rate after 199 cycles with respect to the discharge capacity after 1 cycle. In addition, Figure 4 shows a graph in which the number of cycles is shown on the horizontal axis, and the discharge capacity retention rate is shown on the vertical axis.

### (Example 2)

For the battery before the polymerization of the polymerizable compound according to Example 1, the operation of charge-discharge-charge-discharge was performed as initial charge under conditions similar to those of Example 1. In the second discharge state (2.5 V), the fabricated battery was stored at 60°C for one day to polymerize the polymerizable compound to complete a laminate type secondary battery. Using the battery, a charge and discharge cycle test was performed as in Example 1. The results are shown in Table 1 and Figure 4.

### (Comparative Example 1)

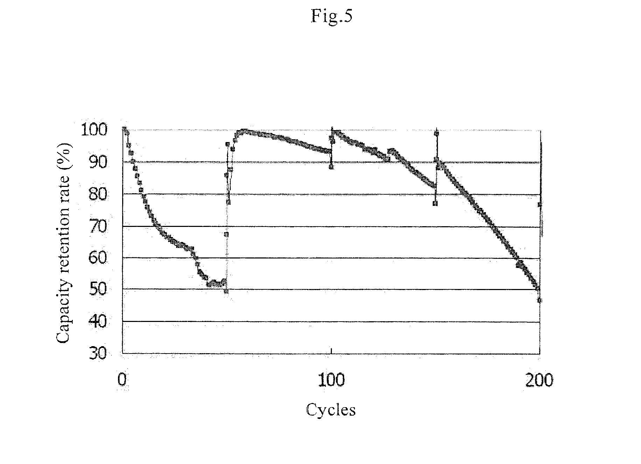

For the battery before the polymerization of the polymerizable compound according to Example 1, initial charge was not performed, and the battery was stored at 60°C for one day to polymerize the polymerizable compound. Thus, a laminate type secondary battery was completed. A charge and discharge cycle test was performed as in Example 1 on the battery fabricated in this manner. Table 1 shows the discharge capacity per the mass of the negative electrode active material after 199 cycles, and the discharge capacity retention rate after 199 cycles with respect to the discharge capacity after 1 cycle. In addition, Figure 5 shows a graph in which the number of cycles is shown on the horizontal axis, and the discharge capacity retention rate is shown on the vertical axis.

Compared with Examples 1 and 2, the capacity retention rate of Comparative Example 1 was low, and a large effect of this exemplary embodiment was demonstrated.

[Table 1]

**[Table 1]**

| | Discharge capacity per mass of negative electrode active material after 199 cycles (mAh/g) | Discharge capacity retention rate after 199 cycles (%) |
|---|---|---|
| Example 1 | 956 | 81.3 |
| Example 2 | 912 | 82.7 |
| Comparative Example 1 | 524 | 62.3 |

While the invention of this application has been described with reference to the exemplary embodiment (and Examples), the invention of this application is not limited to the above exemplary embodiment (and Examples). Various changes that can be understood by those skilled in the art can be made in the configuration and details of the invention of this application within the scope of the claims.

### Reference Signs List

- 1:: SiO2
- 2:: Si
- 3:: polymer
- 4:: conductive agent (carbon)
- 5:: LiₓSi (Si alloyed with Li)
- 6:: void
- 7:: exterior member
- 8:: negative electrode
- 9:: separator
- 10:: positive electrode
- 11:: negative electrode conductive tab
- 12:: positive electrode conductive tab

## Claims

1. A method for manufacturing a polymer secondary battery comprising
a positive electrode (10), a negative electrode (8),
a separator (9) interposed between the positive electrode (10) and the negative electrode (8),
a gel electrolyte, and
an exterior member (7) packaging the positive electrode, the negative electrode, the separator, and the gel electrolyte, the negative electrode comprising silicon and silicon oxide as a negative electrode active material, the method comprising, in the following order, the steps of:
(a) enclosing the positive electrode (10), the negative electrode (8), the separator (9), and a gel electrolyte composition comprising a polymerizable compound inside the exterior member;
(b) at least performing charge once at a temperature at which the polymerizable compound is not polymerized, and infiltrating the gel electrolyte composition comprising the polymerizable compound into voids formed by fine division of particles of the negative electrode active material due to a large volume change accompanying the charge; and
(c) polymerizing the polymerizable compound to provide a gel electrolyte,
wherein the battery was polymerized in the second fully charged state after fully charge-discharge-fully charge.

2. The method for manufacturing a polymer secondary battery according to claim 1, wherein the polymer secondary battery is a laminate type secondary battery.

3. The method for manufacturing a polymer secondary battery according to any one of claims 1 to 2, wherein the temperature of the charge is 20 to 30°C.

4. The method for manufacturing a polymer secondary battery according to any one of claims 1 to 3, wherein in the charge, the charge termination voltage is 4.2 to 3.8 V.

5. The method for manufacturing a polymer secondary battery according to any one of claims 1 to 4, wherein the charge is performed at least twice.

## Patentansprüche

1. Verfahren zur Herstellung einer Polymersekundärbatterie, die aufweist:
eine positive Elektrode (10), eine negative Elektrode (8),
einen Separator (9), der zwischen der positiven Elektrode (10) und der negativen Elektrode (8) eingefügt ist,
einen Gelelektrolyt und
ein Außenbauteil (7), das die positive Elektrode, die negative Elektrode, den Separator und den Gelelektrolyt einhaust, wobei die negative Elektrode Silizium und Siliziumoxid als aktives Material der negativen Elektrode aufweist und das Verfahren in der folgenden Reihenfolge die Schritte aufweist:
(a) Einschließen der positiven Elektrode (10), der negativen Elektrode (8), des Separators (9) und einer Gelelektrolytzusammensetzung mit einer polymerisierbaren Verbindung innerhalb des Außenbauteils;
(b) mindestens einmaliges Laden bei einer Temperatur, bei der die polymerisierbare Verbindung nicht polymerisiert wird, und Infiltrieren der Gelelektrolytzusammensetzung mit der polymerisierbaren Verbindung in Hohlräume, die durch feine Teilung von Teilchen des aktiven Materials der negativen Elektrode infolge einer großen Volumenänderung gebildet sind, die mit dem Laden einhergeht; und
(c) Polymerisieren der polymerisierbaren Verbindung, um einen Gelelektrolyt bereitzustellen,
wobei die Batterie im zweiten voll geladenen Zustand nach vollem Laden-Entladen-vollem Laden polymerisiert wurde.

2. Verfahren zur Herstellung einer Polymersekundärbatterie nach Anspruch 1, wobei die Polymersekundärbatterie eine Sekundärbatterie vom Laminattyp ist.

3. Verfahren zur Herstellung einer Polymersekundärbatterie nach Anspruch 1 oder 2, wobei die Temperatur des Ladens 20 bis 30°C beträgt.

4. Verfahren zur Herstellung einer Polymersekundärbatterie nach einem der Ansprüche 1 bis 3, wobei beim Laden die Ladeabschlussspannung 4,2 bis 3,8 V beträgt.

5. Verfahren zur Herstellung einer Polymersekundärbatterie nach einem der Ansprüche 1 bis 4, wobei das Laden mindestens zweimal durchgeführt wird.

## Revendications

1. Procédé de fabrication d'une batterie secondaire à polymère comprenant:
une électrode positive (10), une électrode négative (8),
un séparateur (9) intercalé entre l'électrode positive (10) et l'électrode négative (8),
un électrolyte en gel, et
un élément extérieur (7) emballant l'électrode positive, l'électrode négative, le séparateur et l'électrolyte en gel, l'électrode négative comprenant du silicium et de l'oxyde de silicium en tant que matériau actif d'électrode négative, le procédé comprenant, dans l'ordre suivant, les étapes consistant à :
(a) confiner l'électrode positive (10), l'électrode négative (8), le séparateur (9) et une composition d'électrolyte en gel comprenant un composé polymérisable à l'intérieur de l'élément extérieur ;
(b) au moins effectuer une charge une fois à une température à laquelle le composé polymérisable n'est pas polymérisé et infiltrer la composition d'électrolyte en gel comprenant le composé polymérisable dans des vides formés par la division fine des particules du matériau actif de l'électrode négative du fait d'une grande variation de volume accompagnant la charge ; et
(c) polymériser le composé polymérisable afin de produire un électrolyte en gel,
dans lequel la batterie a été polymérisée dans le deuxième état complètement chargé après une charge complète-décharge-charge complète.

2. Procédé de fabrication d'une batterie secondaire à polymère selon la revendication 1, dans lequel la batterie secondaire à polymère est une batterie secondaire de type stratifié.

3. Procédé de fabrication d'une batterie secondaire à polymère selon l'une quelconque des revendications 1 à 2, dans lequel la température de la charge est de 20 à 30°C.

4. Procédé de fabrication d'une batterie secondaire à polymère selon l'une quelconque des revendications 1 à 3, dans lequel, dans la charge, la tension de fin de charge est de 4,2 à 3,8 V.

5. Procédé de fabrication d'une batterie secondaire à polymère selon l'une quelconque des revendications 1 à 4, dans lequel la charge est effectuée au moins deux fois.
